# EUROPÄISCHE PATENTANMELDUNG

(11) **EP 2 163 290 A1**
(43) Veröffentlichungstag der Anmeldung: **17.03.2010**
(21) Anmeldenummer: 08016115.1
(22) Anmeldetag: 12.09.2008
(51) Int. Cl.: B01D 45/12, B04C 5/04, C25B 1/04, C25B 15/08

(54) **Abscheidebehälter**

(71) Anmelder: H-TEC Wasserstoff-Energie-Systeme GmbH, 23558 Lübeck (DE)
(72) Erfinder: Würfel, Claus, 23558 Lübeck (DE)
(74) Vertreter: Vollmann, Heiko

(57) **Zusammenfassung**

Der Abscheidebehälter ist für den Betrieb eines Elektrolyseurs der PEM-Bauart vorgesehen. Er weist nahe seinem oberen Ende einen Leitungsanschluss (14) für die Gasentnahme, nahe seinem unteren Ende einen Leitungsanschluss (16) für die Flüssigkeitsentnahme und dazwischen einen Leitungsanschluss (13) für den Einlass des aus dem Elektrolyseur austretenden Gas-/Flüssigkeitsgemisches auf. Der Behälter (11) beinhaltet einen Zyklonabscheider (26), der einen Teil des Behälters (11) bildet, wobei der Leitungsanschluss (13) für den Einlass des Gas-/Flüssigkeitsgemisches im Bereich des Zyklonabscheiders (26) etwa tangential in das Behälterinnere mündet.

## Beschreibung

Die Erfindung betrifft einen Abscheidebehälter gemäß den im Oberbegriff des Anspruchs 1 angegebenen Merkmalen.

Bei Elektrolyseuren, beispielsweise der Polymerelektrolytmembranbauart, die typischerweise in Stapeln mit einer Vielzahl von Zellen betrieben werden, ist einerseits ständig reines, d.h. destilliertes oder zumindest demineralisiertes Wasser zuzuführen, andererseits sind die Produktgase abzuführen. Insbesondere bei größeren Vorrichtungen ist auch noch Wasser zum Zwecke der Kühlung zuzuführen, d.h. die Zellen sind mit Wasserüberschuss zu fahren. Dies führt dazu, dass insbesondere bei hohem Durchsatz das austretende Gas nicht als reines Gas sondern mit Wasser und Wasserdampf gemischt austritt, und zwar insbesondere auf der Sauerstoffseite, da nämlich Sauerstoff im Verhältnis zum Wasser etwa in gleicher Menge entsteht, was einen Abscheidebehälter zur Separation von Wasser und Gas erforderlich macht. Wasserstoff tritt in 260-facher Menge zum Wasser aus. Auch hier wird ein Behälter zur Gas-Wasser-Abscheidung benötigt. Dieser kann allerdings als einfacher Behälter ausgeführt sein, in dem sich die Wassertropfen unten sammeln und gelegentlich abgelassen werden.

Um jedoch Sauerstoff und Wasser zu trennen, ist ein Abscheidebehälter erforderlich, wie er zum Stand der Technik zählt. Hierzu dient beim Stand der Technik ein großvolumiger druckfester Behälter, der so dimensioniert ist, dass ausreichend Raum zur Verfügung steht, damit das mit hoher Geschwindigkeit eintretende typischerweise aus Sauerstoff und Wasser bestehende Gemisch getrennt und dann der Sauerstoff nahe der Oberseite abgezogen und das Wasser nahe der Unterseite abgezogen werden kann. Um das beispielsweise mit 20m/s einströmende Wasser-gasgemisch physikalisch zu trennen, ist ein vergleichsweise großer und druckfester Behälter erforderlich, der kostenaufwendig in der Herstellung und raumintensiv in der Anwendung ist. Darüber hinaus zählt es zum Stand der Technik, zusätzlich einen Vorratsbehälter für Wasser einzusetzen, aus dem der Abscheidebehälter gespeist wird und in dem das für den Elektrolysevorgang und die Kühlung erforderliche Wasser bevorratet wird.

Vor diesem Hintergrund liegt der Erfindung die Aufgabe zugrunde, eine Abscheidebehälter zu schaffen, der die vorgenannten Nachteile vermindert und insbesondere möglichst kompakt ausgebildet ist, um auf diese Weise die Baugröße der Vorrichtung zur Gaserzeugung insgesamt verringern zu können.

Diese Aufgabe wird gemäß der Erfindung durch einen Abscheidebehälter gemäß den in Anspruch 1 angegebenen Merkmalen gelöst. Vorteilhafte Ausgestaltungen der Erfindung ergeben sich aus den Unteransprüchen, der nachfolgenden Beschreibung und der Zeichnung.

Der erfindungsgemäße Abscheidebehälter ist insbesondere für den Betrieb eines Elektrolyseurs der Polymer-Elektrolyt-Membran (PEM)-Bauart bestimmt und ausgelegt, jedoch hierauf nicht beschränkt sondern grundsätzlich auch mit anderen Elektrolyseuren verwendbar. Er weist nahe seinem oberen Ende einen Leitungsanschluss für die Gasentnahme und nahe seinem unteren Ende einen Leitungsanschluss für die Flüssigkeitsentnahme auf. Zwischen den vorgenannten Leitungsanschlüssen ist ein Leitungsanschluss für den Einlass des aus dem Elektrolyseur austretenden Gas-/Flüssigkeitsgemisches vorgesehen, typischerweise für die Zufuhr eines Sauerstoff-/Wasser-Gemisches. Erfindungsgemäß weist der Behälter einen Zyklonabscheider auf, der einen Teil des Behälters bildet und zwar derart, dass der Leitungsanschluss für den Einlass des Gas-/Flüssigkeitsgemisches im Bereich des Zyklonabscheiders etwa tangential in das dort vorzugsweise zylindrische Behälterinnere mündet.

Durch die Integration eines Zyklonabscheiders in den Abscheidebehälter kann dieser wesentlich kompakter gebaut werden, da das mit hoher Geschwindigkeit tangential in den Abscheidebehälter eintretende Gas-/Flüssigkeitsgemisch zentrifugalkraftunterstützt getrennt wird und das Gas nach oben und die Flüssigkeit nach unten abgeschieden werden. Eine solche kompakte Gestaltung des Abscheidebehälters ist in mehrfacher Hinsicht günstig, da einerseits der Platzbedarf in der Gesamtvorrichtung geringer und damit die Gaserzeugungsvorrichtung als Ganzes deutlich kompakter ausgebildet werden kann. Durch die geringeren Abmessungen des Abscheidebehälters in Vergleich zu bekannten Abscheidebehöltern ist darüber hinaus die auf die Behälterwände wirkende Kraft bei gleichem Druck geringer, weshalb diese in geringerer Wandstärke ausgebildet werden können als beim Stand der Technik.

Gemäß einer vorteilhaften Ausgestaltung der Erfindung ist dabei der Leitungsanschluss für die Gasabfuhr nicht im Bereich des Zyklonabscheiders angeordnet, sondern mündet in einer am oberen Ende des Behälters angeordnete Kammer, in welcher sich das bereits von der Flüssigkeit getrennte Gas sammelt. Diese Kammer ist über einen vorzugsweise zentralen Kanal mit dem darunter angeordneten Zyklonabscheider leitungsverbunden, der in der Mitte des Zyklonabscheiders achsgleich zu diesem in diesem mündet. Da der Verbindungskanal zu der Kammer im Zentrum des Zyklonabscheiders anschließt, gelangt dort keine Flüssigkeit hinein, denn die Flüssigkeit wird durch den tangential einmündenden Leitungsanschluss in eine Rotationsströmung längs der Zylinderwandung des Zyklonabscheiders versetzt und strömt schraubenlinienförmig nach unten.

Vorteilhaft weist der Behälter im Bereich des Zyklonabscheiders eine im Wesentlichen zylindrische oder leicht konische, nach unten aufgeweitete Innenkontur auf. Vorteilhaft schließt an den Zyklonabscheider nach unten hin ein Vorratsbehälter für die Flüssigkeit an. Um hier ausreichendes Volumen für die Flüssigkeit zu haben ist es vorteilhaft, wenn sich die Innenkontur des Behälters im Anschluss an den Zyklonabscheider nach unten hin weiter aufweitet, dort wo der Behälter den Vorratsbehälter bildet. Durch eine solche Ausgestaltung kann auf den sonst üblichen gesonderten Vorratsbehälter für Wasser grundsätzlich verzichtet werden, da bei geeigneter Dimensionierung einerseits der Abscheidebehälter ausreichend schlank andererseits jedoch ein genügendes Innenvolumen hat um den Elektrolyseur mit genügend Flüssigkeit zu versorgen. Dabei hat die im Vergleich zum Stand der Technik schlanke Form des Abscheidebehälters den großen Vorteil, dass eine vergleichsweise geringe Wandstärke ausreicht, um die erforderliche Druckfestigkeit zu gewährleisten. Dies verbilligt die Herstellungskosten und verringert die Baugröße.

Gemäß einer vorteilhaften Weiterbildung der Erfindung weist der Behälter an seiner Innenseite einen umlaufenden Innenwulst auf, der über dem Leitungsanschluss für die Flüssigkeitsentnahme im Bereich des Vorratsbehälters angeordnet ist. Dieser Innenwulst dient dazu sicherzustellen, dass etwaige in der Flüssigkeit noch befindliche Gasblasen vor der Entnahme durch den Leitungsanschluss durch mechanische Unterstützung des Wulstes abgeschieden werden und nach oben gelangen. Dieser Innenwulst ist vorzugsweise im Querschnitt gerundet, erhebt sich also beispielsweise halbkreisförmig von der Innenwandung.

Anstelle eines solchen Wulstes kann gemäß einer Weiterbildung der Erfindung eine den Behälter nach unten aufweitende umlaufende Abstufung an der Behälterinnenseite vorgesehen sein, die über dem Leitungsanschluss für die Flüssigkeitsentnahme im Bereich des Vorratsbehälters angeordnet ist. Eine solche Abstufung hat den gleichen, vorbeschriebenen Effekt.

Die vorliegende Erfindung beschränkt sich jedoch nicht auf einen umlaufenden Wulst oder eine Abstufung, der Behälter kann gemäß einer Weiterbildung der Erfindung auch eine andere umlaufende Verengung aufweisen, die über dem Leitungsanschluss für die Flüssigkeitsentnahme im Bereich des Vorratsbehälters angeordnet ist, um eine mechanische Gasblasenabscheidung in diesem Bereich des Behälters zu unterstützen.

Da dem Elektrolyseur im Laufe der Zeit neben der umlaufenden Flüssigkeit auch die Flüssigkeit zugesetzt werden muss, die durch die Elektrolyse verloren gegangen ist, ist gemäß einer Weiterbildung der Erfindung ein weiterer Leitungsanschluss am Abscheidebehälter vorgesehen, mit dem der im unteren Teil des Abscheidebehälters befindliche Vorratsbehälter befüllt werden kann. Hierzu ist der Leitungsanschluss zweckmäßigerweise im Bereich des Vorratsbehälters angeordnet, also unterhalb des Zyklonabscheiders. Grundsätzlich ist bei der erfindungsgemäßen Ausbildung ein zusätzlicher Vorratsbehälter für Flüssigkeit bei geeigneter Dimensionierung des Abscheidebehälters entbehrlich. Insbesondere jedoch bei Anwendungen mit einem hohen Wasserdurchsatz, bei dem das Wasser auch als Kühlwasser eingesetzt wird, kann es vorteilhaft sein, den Vorratsbehälter innerhalb des Abscheidebehälters deutlich kleiner zu dimensionieren und einen zusätzlichen externen Vorratsbehälter vorzusehen, da dann der Prozess aufgrund der geringeren umgewälzten Wassermenge schneller anläuft und der Elektrolyseur schneller auf Betriebstemperatur kommt. Es versteht sich, dass der Abscheidebehälter dann natürlich noch deutlich raumsparender konstruiert werden kann.

Der erfindungsgemäße Abscheidebehälter kann vorteilhaft aus einem rohrförmigen innenkonturierten Bauteil aufgebaut werden, das durch zwei endseitige Deckel abgeschlossen wird. Ein solches innenkonturiertes Rohr kann aus Kunststoff oder aus Metall kostengünstig als Drehteil aus Vollmaterial hergestellt werden. Es sind dann lediglich Befestigungen für die stirnseitigen Deckel vorzusehen. Alternativ kann der Abscheidebehälter auch als Gussteil hergestellt werden. Dann kann ggf. einer der Deckel integraler Bestandteil dieses Gussteils sein, oder bei einer Längsteilung auch beide:

Gemäß einer Weiterbildung der Erfindung ist innerhalb des Abscheidebehälters, vorzugsweise im oberen Wandungsbereich des Vorratsbehälters ein Füllstandssensor vorgesehen. Einer oder mehrere solcher Sensoren können durch entsprechende Ausnehmungen in der Behälterwand z.B. mittels eines Gewindes oder durch Einsatz einer entsprechenden Sensoreinheit an der Innenseite des Behälters eingegliedert werden. Über eine solche Füllstandserfassung kann ggf. eine selbsttätige Befüllung des Behälters gesteuert werden, es können auch andere Prozessparameter hierdurch gesteuert werden.

Insbesondere bei der Verwendung zur Elektrolyse von Wasser kann es zweckmäßig sein, einen Gassensor vorzusehen, der vorzugsweise in einer Ausnehmung des Behälterdeckels angeordnet wird. Ein solcher Gassensor kann beispielsweise zur Detektion von Wasserstoff dienen um bei Undichtigkeiten in einer der PEM-Zellen des Elektrolyseurs rechtzeitig ein sich möglicherweise im oberen Bereich des Behälters bildendes gefährliches Knallgasgemisch zu detektieren und den Prozess bzw. die Vorrichtung entsprechend zu steuern.

Besonders vorteilhaft wird der erfindungsgemäße Abscheidebehälter in einer Vorrichtung zur Gaserzeugung mit einem Elektrolyseur der PEM-Bauart eingesetzt. Mit diesem Abscheidebehälter kann eine sehr kostengünstige und kompakte Vorrichtung aufgebaut werden. So können beispielsweise mit einem Abscheidebehälter von ca. 35 cm Höhe und 15 cm Außendurchmesser Elektrolyseure betrieben werden, in denen bis zu 7,2 Nm³/h (Normkubikmeter pro Stunde) Gas umgesetzt werden.

Die Erfindung ist nachfolgend anhand eines in der Zeichnung dargestellten Ausführungsbeispiels näher erläutert. Es zeigen:
- Fig. 1: in stark vereinfachter schematischer Darstellung die Baugruppen einer Vorrichtung zur Gaserzeugung und deren hydraulische Verknüpfung in perspektivischer Darstellung,
- Fig. 2: in stark vereinfachter perspektivischer Darstellung einen Längsschnitt durch einen Abscheidebehälter gemäß der Erfindung und
- Fig. 3: eine Schnittdarstellung längs der Schnittebene III-II in Fig. 2.

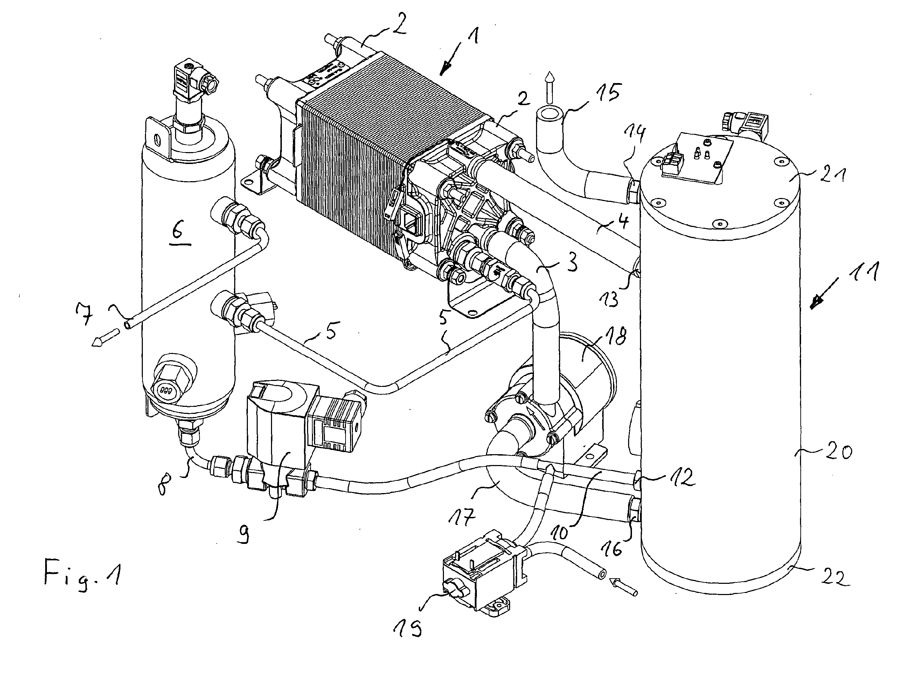

Die Gaserzeugungsvorrichtung wie sie in Fig. 1 dargestellt ist, weist als Elektrolyseur 1 einen Stapel von Polymer-Elektrolyse-Membran-Zellen auf, die jeweils über eine Bipolarplatte elektrisch miteinander verbunden sind und die jeweils zu beiden Seiten einer Membran ein Kanalnetz zur Abfuhr der Elektrolyse-Produkte sowie einseitig zur Zufuhr des Ausgangsstoffs, hier Wasser aufweisen. Derartige auf Polymer-Elektrolyt-Membran-Basis arbeitende und zu einem Stapel zwischen Endplatten 2 eingespannte Elektrolyseure sind an sich bekannt, weshalb deren Funktion hier nicht im Einzelnen erläutert wird.

Der in Fig. 1 dargestellte Elektrolyseur weist eine Eingangsleitung 3 auf, über welche diesem deionisiertes Wasser zugeführt wird. Das deionisierte Wasser wird im Überschuss zugeführt und dient gleichzeitig zur Kühlung. Das über die Eingangsleitung 3 in den Elektrolyseur 1 eingebrachte Wasser strömt jeweils längs der Sauerstoffseiten der einzelnen Elektrolyse-Zellen und führt ausgangsseitig den bei der Elektrolyse entstehenden Sauerstoff mit. Dieses Wasser-Gasgemisch tritt durch einen Ausgangsleitung 4 aus dem Elektrolyseur 1 aus. Der auf der anderen Seite der Membran jeweils gebildete Wasserstoff wird durch eine Leitung 5 aus dem Elektrolyseur herausgeführt und gelangt über diese Leitung in einen Wasserstofftank 6, der eine Ausgangsleitung 7 aufweist, die zu einem Verbraucher führt.

Da die Menge des Wasserstoffs im Vergleich zu der Menge des bei dem Elektrolyseprozess auf der Wasserstoffseite austretenden Wassers etwa um den Faktor 260 größer ist, tritt dieses extrem leichte Gas in großer Menge durch die Leitung 5 in den Behälter 6, besondere Vorkehrungen für eine Wasserabscheidung sind hier grundsätzlich nicht erforderlich, da zum einen auf der Wasserstoffseite nur wenig Wasser mitgeführt werden sollte und zum anderen schon aufgrund des Unterschieds im spezifischen Gewicht eine Abscheidung selbsttätig und ohne zusätzliche technische Hilfsmittel erfolgt. Das sich am Boden des Wasserstofftanks 6 sammelnde Wasser wird durch eine Leitung 8, welche im Boden des Tanks 6 mündet, mittels eines Wasserrücklaufventils 9 abgeführt und über eine Leitung 10 in einen Abscheidebehälter 11 geleitet, und zwar zu einem Befüllanschluss 12.

Das aus dem Elektrolyseur 1 über die Ausgangsleitung 4 abgeführte Sauerstoffwassergemisch gelangt über einen Leitungsanschluss 13 in den Abscheidebehälter 11. Der Abscheidebehälter, dessen Aufbau weiter unten noch im Einzelnen beschrieben wird, weist darüber hinaus oberhalb des Leitungsanschlusses 13 einen Leitungsanschluss 14 auf für die Gas-, insbesondere Sauerstoffentnahme, der mit einer Leitung 15 verbunden ist, die zu einem Verbraucher führt. Während der Leitungsanschluss 14 für die Gasentnahme nahe der Oberseite des Abscheidebehälters 11 seitlich angeordnet ist, ist ein Leitungsanschluss 16 für die Wasserentnahme nahe der Unterseite des Behälters 11 ebenfalls seitlich angeordnet. Dieser Leitungsanschluss 16 ist über eine Leitung 17 mit einer Pumpe 18 verbunden, welche über die Leitung 3 ner Pumpe 18 verbunden, welche über die Leitung 3 den Elektrolyseur 1 mit deionisiertem Wasser speist, und zwar im Überschuss um damit auch zu kühlen.

Darüber hinaus weist die Vorrichtung eine Befüllpumpe 19 auf, mittels der das durch Elektrolyse, in Sauerstoff und Wasserstoff aufgespaltete Wasser nachgefüllt und über die Leitung 10 dem Abscheidebehälter 11 zugeführt werden kann.

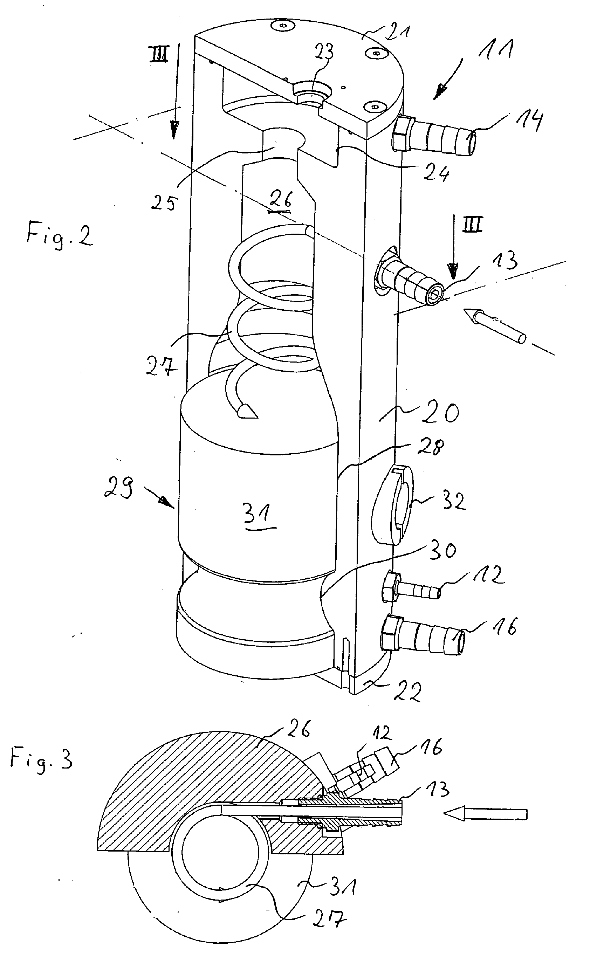

Der anhand der Figuren 2 und 3 in seinem Aufbau dargestellte Abscheidebehälter 11 ist im Wesentlichen zylindrischer Gestalt und im dargestellten Ausführungsbeispiel aus einem Rohrabschnitt 20 aufgebaut, der endseitig mit Deckeln 21 und 22 fest und dicht verschlossen ist, nämlich einem oberen Deckel 21 und einem unteren Deckel 22. Die Deckel 21 und 22 sind in der dargestellten Ausführung mit Schrauben in den Enden des Rohrabschnitts 20 festgelegt. Sie weisen jeweils eine zentrale Öffnung 23 auf, die jedoch in der Figur 2 nur im oberen Deckel 21 sichtbar ist und dort zur Eingliederung eines Gassensors, insbesondere eines Wasserstoffsensors vorgesehen ist, wie dies bei dem in Fig. 1 dargestellten Abscheidebehälter 11 zu sehen ist. Dieser Sensor in der Öffnung 23 dient zur Detektion von Wasserstoff oder ggf. auch anderen Gasen und ist mit einer Sicherheitssteuerung verbunden, welche dafür sorgt, dass beim Auftreten explosionsgefährdeter Mengen, also eines Knallgasgemisches, die Anlage abgeschaltet wird.

Die entsprechende Öffnung in dem unteren Deckel 22 ist mit einer Schraube dicht verschlossen und dient als Ablassöffnung zum vollständigen Entleeren des Behälters 11.

Die Öffnung 23 mündet genauso wie der Gasentnahmeanschluss 14 in einer im Wesentlich zylindrisch ausgebildeten Kammer 24 am oberen Ende des Behälters 11. Diese Kammer 24 ist über einen zentralen Kanal 25 mit dem oberen Ende eines darunter in den Behälter 11 integrierten Zyklonabscheiders 26 verbunden. Der Zyklonabscheider 26 ist in diesem Bereich durch eine zylindrische Behälterinnenwand gebildet, in die tangential die durch den Leitungsanschluss 13 verbundene Leitung 4 mündet. Das durch den Leitungsanschluss 13 mit hoher Geschwindigkeit eintretende Wassersauerstoffgemisch wird durch die tangentiale Leitungseinmündung und die Zylinderinnenwand in eine Rotationsströmung versetzt, wodurch in an sich bekannter Weise Flüssigkeit und Gas voneinander abgeschieden werden. Der Flüssigkeitsstrom ist in Fig. 2 durch den sich schraubenlinienförmig an der Innenwand nach unten sich schlöngelnden Pfeil 27 dargestellt. Das in der Mitte des Zyklonabscheiders 26 aufsteigende Gas, hier also Sauerstoff, gelangt durch den zentralen Kanal 25 in die darüber befindliche Abscheidekammer 24, wo es über den Gasentnahmeanschluss 14 einem Verbraucher oder einer Bevorratung zugeführt werden kann.

Der Zyklonabscheider 26 weitet sich nach unten hin auf und geht schließlich in einen zylindrischen Bereich 28 über, der Teil eines im unteren Bereich des Behälters 11 befindlichen Vorratsbehälters 29 bildet. Der Vorratsbehälter 29 wird nach unten hin durch den unteren Deckel 22 abgeschlossen. Er weist im Bereich kurz oberhalb der Einmündung des Leitungsanschlusses 16 an seiner Innenseite eine umlaufende Verengung, im dargestellten Ausführungsbeispiel in Form eines umlaufenden Wulstes 30 auf, der etwa einen halbkreisförmigen Querschnitt hat und eine zusätzliche Gasabscheideeinrichtung bildet, welche verhindert, dass im Wasser mitgeführte Gasblasen in den unterhalb des Wulstes 3 befindlichen Bereich des Behälters 11 gelangen, wo der Leitungsanschluss 16 zur Wasserentnahme angeordnet ist und mündet.

Der in Fig. 2 dargestellte Abscheidebehälter, der in seinem unteren Bereich als Vorratsbehälter 29 ausgebildet ist, ist im Betrieb mit Wasser 31 gefüllt, so wie dies anhand der Fig. 2 und 3 beispielhaft dargestellt ist.

Um den Füllstand kontrollieren zu können, sind innen in der Behälterwandung im Bereich des Vorratsbehälters 29 Füllstandsensoren 32 eingegliedert, welche insbesondere einen kritischen zu niedrigen Füllstand detektieren können, um ggf. die Befüllpumpe 19 zu aktivieren und Wasser nachzufüllen.

Der Befüllanschluss 12 liegt unmittelbar über dem Leitungsanschluss 16 bzw. mit geringem vertikalen Abstand dazu, derart, dass im normalen Betrieb der Wasserspiegel nie unter diesen Anschluss abfällt, sodass sichergestellt ist, dass beim Befüllen des Behälters keine Verwirbelung oder Vermengung mit dem im Vorratsbehälter 29 im oberen Bereich befindlichen Sauerstoff erfolgen kann.

### Bezugszeichenliste

- 1 -: Elektrolyseur (Stapel von PEM-Zellen)
- 2 -: Endplatten
- 3 -: Eingangsleitung von 1
- 4 -: Ausgangsleitung von 1
- 5 -: Wasserstoffleitung
- 6 -: Wasserstofftank
- 7 -: Ausgangsleitung des Wasserstofftanks
- 8 -: Wasserablassleitung des Wasserstofftanks
- 9 -: Wasserrücklaufventil
- 10 -: Wasserzufuhrleitung
- 11 -: Abscheidebehälter
- 12 -: Befüllanschluss von 11
- 13 -: Leitungsanschluss für Sauerstoff- und Wassergemisch
- 14 -: Gasentnahmeanschluss
- 15 -: Sauerstoffleitung
- 16 -: Leitungsanschluss zur Wasserentnahme
- 17 -: Leitung
- 18 -: Pumpe
- 19 -: Befüllpumpe
- 20 -: Rohrabschnitt
- 21 -: Oberer Deckel
- 22 -: Unterer Deckel
- 23 -: Öffnung im oberen Deckel
- 24 -: Kammer
- 25 -: Zentraler Kanal
- 26 -: Zyklonabscheider
- 27 -: Pfeil
- 28 -: Zylindrischer Bereich
- 29 -: Vorratsbehälter
- 30 -: Wulst
- 31 -: Wasser
- 32 -: Füllstandsensoren

## Patentansprüche

1. Abscheidebehälter für den Betrieb eines Elektrolyseurs (1) insbesondere eines Elektrolyseurs der PEM-Bauart, mit einem nahe seinem oberen Ende angeordneten Leitungsanschluss (14) für die Gasentnahme, mit einem Leitungsanschluss (16) für die Flüssigkeitsentnahme nahe dem unteren Ende und mit einem dazwischen angeordneten Leitungsanschluss (13) für den Einlass des aus dem Elektrolyseur (1) austretenden Gas-/Flüssigkeitsgemisches, **dadurch gekennzeichnet, dass** der Behälter (11) einen Zyklonabscheider (26) aufweist, der einen Teil des Behälters (11) bildet, und dass der Leitungsanschluss (13) für den Einlass des Gas-/Flüssigkeitsgemisches im Bereich des Zyklonabscheiders (26) etwa tangential in das Behälterinnere mündet.

2. Abscheidebehälter nach Anspruch 1, **dadurch gekennzeichnet, dass** der Leitungsanschluss (14) für die Gasabfuhr in eine am oberen Ende des Behälters (11) angeordnete Kammer (24) mündet, die über einen vorzugsweise zentralen Kanal (25) mit dem darunter angeordneten Zyklonabscheider (26) leitungsverbunden ist.

3. Abscheidebehälter nach einem der vorhergehenden Ansprüche, **dadurch gekennzeichnet, dass** der Behälter (11) im Bereich des Zyklonabscheiders (26) eine im wesentlichen zylindrische Innenkontur aufweist, die nach unten hin aufgeweitet ist und dort einen Vorratsbehälter (29) für die Flüssigkeit (31) bildet.

4. Abscheidebehälter nach einem der vorhergehenden Ansprüche, **dadurch gekennzeichnet, dass** der Behälter (11) einen vorzugsweise im Querschnitt gerundeten umlaufenden Innenwulst (30) aufweist, der über dem Leitungsanschluss (16) für die Flüssigkeitsentnahme im Bereich des Vorratsbehälters (29) angeordnet ist.

5. Abscheidebehälter nach einem der vorhergehenden Ansprüche, **dadurch gekennzeichnet, dass** der Behälter (11) eine vorzugsweise gerundet ausgebildete und den Behälter nach unter aufweitende umlaufende Abstufung aufweist, die über dem Leitungsanschluss (16) für die Flüssigkeitsentnahme im Bereich des Vorratsbehälters (29) angeordnet ist.

6. Abscheidebehälter nach einem der vorhergehenden Ansprüche, **dadurch gekennzeichnet, dass** der Behälter (11) eine umlaufende Verengung aufweist, die über dem Leitungsanschluss (16) für die Flüssigkeitsentnahme im Bereich des Vorratsbehälters (29) angeordnet ist.

7. Abscheidebehälter nach einem der vorhergehenden Ansprüche, **dadurch gekennzeichnet, dass** ein weiterer Leitungsanschluss (12) zum Befüllen des Vorratsbehälters (29) vorgesehen ist, der im Bereich des Vorratsbehälters (29) angeordnet ist.

8. Abscheidebehälter nach einem der vorhergehenden Ansprüche, **dadurch gekennzeichnet, dass** der Behälter (11) aus einem rohrförmigen innenkonturierten Bauteil (20) und zwei dieses endseitig abschließenden Deckeln (21, 22) gebildet ist.

9. Abscheidebehälter nach einem der vorhergehenden Ansprüche, **dadurch gekennzeichnet, dass** im Bereich des Vorratsbehälters (29) ein oder mehrere Füllstandsensor/-en (32) vorgesehen ist/sind.

10. Abscheidebehälter nach einem der vorhergehenden Ansprüche, **dadurch gekennzeichnet, dass** ein Gassensor vorgesehen ist, der vorzugsweise in einer Ausnehmung (23) des Behälterdeckels (21) angeordnet ist.

11. Vorrichtung zur Gaserzeugung mit einem Elektrolyseur (1), insbesondere der PEM-Bauart und mit einem damit leitungsverbundenen Abscheidebehälter (11) nach einem der vorhergehenden Ansprüche.
